# EUROPÄISCHE PATENTSCHRIFT

(11) **EP 2 601 737 B1**
(45) Veröffentlichungstag und Bekanntmachung des Hinweises auf die Patenterteilung: **02.10.2019**
(21) Anmeldenummer: 11727144.5
(22) Anmeldetag: 07.06.2011
(51) Int. Cl.: H02M 7/537, B60L 15/00, H02M 7/483, B60L 50/51

(54) **ENERGIEWANDLER ZUM AUSGEBEN ELEKTRISCHER ENERGIE**
ENERGY CONVERTER FOR OUTPUTTING ELECTRICAL ENERGY
CONVERTISSEUR D'ÉNERGIE DESTINÉ À FOURNIR DE L'ÉNERGIE ÉLECTRIQUE

(30) Priorität: 04.08.2010 DE 102010038880
(43) Veröffentlichungstag der Anmeldung: 12.06.2013
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE); FINK, Holger, 70567 Stuttgart (DE)
(74) Vertreter: Bee, Joachim
(86) Internationale Anmeldenummer: PCT/EP2011/059360
(87) Internationale Veröffentlichungsnummer: WO 2012/016735

(56) Entgegenhaltungen:
- DE-A1- 4 212 864
- DE-A1- 10 103 031
- DE-A1-102008 032 813
- US-A1- 2010 141 201
- MARQUARDT R: "Modular Multilevel Converter: An universal concept for HVDC-Networks and extended DC-Bus-applications", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21. Juni 2010 (2010-06-21), Seiten 502-507, XP031729731, ISBN: 978-1-4244-5394-8
- GLINKA M ET AL: "A New AC/AC Multilevel Converter Family", IEEE TRANSACTIONS ON INDUSTRIAL ELECTRONICS, IEEE SERVICE CENTER, PISCATAWAY, NJ, USA, Bd. 52, Nr. 3, 1. Juni 2005 (2005-06-01), Seiten 662-669, XP011133044, ISSN: 0278-0046, DOI: 10.1109/TIE.2005.843973

## Beschreibung

Die vorliegende Erfindung betrifft einen Energiewandler zum Ausgeben elektrischer Energie und ein Verfahren zum Versorgen eines elektrischen Antriebssystems.

### Stand der Technik

Es zeichnet sich ab, dass in Zukunft sowohl bei stationären Anwendungen als auch bei Fahrzeugen wie Hybrid- und Elektrofahrzeugen vermehrt Batteriesysteme zum Einsatz kommen werden. Um die für eine jeweilige Anwendung gegebenen Anforderungen an Spannung und zur Verfügung stellbare Leistung erfüllen zu können, werden eine hohe Zahl von Batteriezellen in Serie geschaltet. Da der von einer solchen Batterie bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Dies kann entweder durch Vorsehen von mehreren Zellwickeln innerhalb eines Batteriezellengehäuses oder durch externes Verschalten von Batteriezellen geschehen.

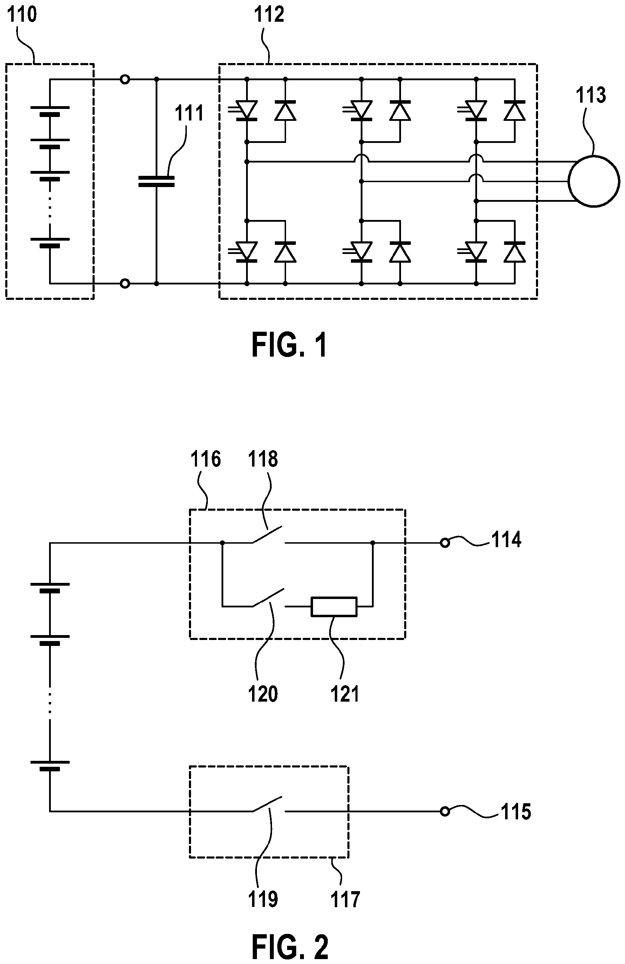

Das Prinzipschaltbild eines üblichen elektrischen Antriebssystems, wie es beispielsweise in Elektro- und Hybrid-Fahrzeugen oder auch in stationären Anwendungen wie bei der Rotorblattverstellung von Windkraftanlagen zum Einsatz kommt, ist in Figur 1 dargestellt. Eine Batterie 110 ist an einen Gleichspannungszwischenkreis angeschlossen, welcher durch einen Kondensator 111 gepuffert wird. An den Gleichspannungszwischenkreis angeschlossen ist ein Pulswechselrichter 112, der über jeweils zwei schaltbare Halbleiterventile und zwei Dioden an drei Ausgängen gegeneinander phasenversetzte Sinusspannungen für den Betrieb eines elektrischen Antriebsmotors 113 bereitstellt. Die Kapazität des Kondensators 111 muss groß genug sein, um die Spannung im Gleichspannungszwischenkreis für eine Zeitdauer, in der eines der schaltbaren Halbleiterventile durchgeschaltet wird, zu stabilisieren. In einer praktischen Anwendung wie einem Elektrofahrzeug ergibt sich eine hohe Kapazität im Bereich von mF. Wegen der üblicherweise recht hohen Spannung des Gleichspannungszwischenkreises kann eine so große Kapazität nur unter hohen Kosten und mit hohem Raumbedarf realisiert werden.

Figur 2 zeigt die Batterie 110 der Figur 1 in einem detaillierteren Blockschaltbild. Eine Vielzahl von Batteriezellen sind in Serie sowie optional zusätzlich parallel geschaltet, um eine für eine jeweilige Anwendung gewünschte hohe Ausgangsspannung und Batteriekapazität zu erreichen. Zwischen den Pluspol der Batteriezellen und ein positives Batterieterminal 114 ist eine Lade- und Trenneinrichtung 116 geschaltet. Optional kann zusätzlich zwischen den Minuspol der Batteriezellen und ein negatives Batterieterminal 115 eine Trenneinrichtung 117 geschaltet werden. Die Trenn- und Ladeeinrichtung 116 und die Trenneinrichtung 117 umfassen jeweils ein Schütz 118 beziehungsweise 119, welche dafür vorgesehen sind, die Batteriezellen von den Batterieterminals abzutrennen, um die Batterieterminals spannungsfrei zu schalten. Aufgrund der hohen Gleichspannung der seriengeschalteten Batteriezellen ist andernfalls erhebliches Gefährdungspotential für Wartungspersonal oder dergleichen gegeben. In der Lade- und Trenneinrichtung 116 ist zusätzlich ein Ladeschütz 120 mit einem zu dem Ladeschütz 120 in Serie geschalteten Ladewiderstand 121 vorgesehen. Der Ladewiderstand 121 begrenzt einen Aufladestrom für den Kondensator 111, wenn die Batterie an den Gleichspannungszwischenkreis angeschlossen wird. Hierzu wird zunächst das Schütz 118 offen gelassen und nur das Ladeschütz 120 geschlossen. Erreicht die Spannung am positiven Batterieterminal 114 die Spannung der Batteriezellen, kann das Schütz 119 geschlossen und gegebenenfalls das Ladeschütz 120 geöffnet werden. Die Schütze 118, 119 und das Ladeschütz 120 erhöhen die Kosten für eine Batterie 110 nicht unerheblich, da hohe Anforderungen an ihre Zuverlässigkeit und an die von ihnen zu führenden Ströme gestellt werden.

Soweit in diesem Dokument von Batterien und Batteriezellen als typische elektrochemische Energiewandler beziehungsweise Wandlerzellen gesprochen wird, können gleichzeitig auch andere Arten von Energiewandlern beziehungsweise Wandlerzellen, die elektrische Energie ausgeben können, gemeint sein. Dies schließt insbesondere photovoltaische Energiewandler wie Solarzellen ein.

Die Druckschrift DE 10 2008 032 813 A1 offenbart zur Anbindung von Solarzellen an ein elektrisches Versorgungsnetz, die Solarzellen in Gruppen aufzuteilen, die jeweils eine Ausgangsspannung erzeugen. Für jede Gruppe werden Hoch- oder Tiefsetzsteller und eine Vollbrücke vorgesehen. Die Vollbrücken werden in Reihe geschaltet. Die Vollbrücken können zwischen Ein- und Ausgangsanschluss jeweils die Ausgangsspannung in positiver und negativer Polarität oder 0V erzeugen. Die Vollbrücken werden so geschaltet, dass sie durch Summierung einer zeitlich variablen Anzahl der Ausgangsspannungen ein sinusförmiges Signal erzeugen.

Die Druckschrift DE 101 03 031 A1 offenbart Stromrichterschaltungen mit verteilten Energiespeichern, insbesondere für höhere Spannungen und Leistungen, die eine Reihenschaltung von Leistungshalbleitern erfordern, sowie zugehörige Steuerverfahren.

### Offenbarung der Erfindung

Die vorliegende Erfindung bezieht sich auf einen Energiewandler gemäß Anspruch 1 und auf ein Verfahren zum Versorgen eines elektrischen Antriebssystems gemäß Anspruch 9. Vorteilhafte Ausführungsformen sind in den abhängigen Ansprüchen definiert.

Erfindungsgemäß wird daher ein Energiewandler zum Ausgeben elektrischer Energie eingeführt. Der Energiewandler weist wenigstens ein erstes Wandlerzellenmodul und wenigstens ein zweites Wandlerzellenmodul auf, welche jeweils wenigstens eine Wandlerzelle und eine Koppeleinheit umfassen. Die wenigstens eine Wandlerzelle ist zwischen einen ersten Eingang und einen zweiten Eingang der Koppeleinheit geschaltet. Die Koppeleinheit ist ausgebildet, auf ein erstes Steuersignal hin die wenigstens eine Wandlerzelle zwischen ein erstes Terminal des Wandlerzellenmoduls und ein zweites Terminal des Wandlerzellenmoduls zu schalten und auf ein zweites Steuersignal hin das erste Terminal mit dem zweiten Terminal zu verbinden. Erfindungsgemäß sind die wenigstens eine Wandlerzelle des wenigstens einen ersten Wandlerzellenmoduls in einer ersten Polarität zwischen den ersten Eingang und den zweiten Eingang der Koppeleinheit des wenigstens einen ersten Wandlerzellenmoduls und die wenigstens eine Wandlerzelle des wenigstens einen zweiten Wandlerzellenmoduls in einer der ersten Polarität entgegengesetzten zweiten Polarität zwischen den ersten Eingang und den zweiten Eingang der Koppeleinheit des wenigstens einen zweiten Wandlerzellenmoduls geschaltet.

Die Koppeleinheit ermöglicht es, eine oder mehrere zwischen den ersten und den zweiten Eingang geschaltete Wandlerzellen entweder so an den ersten und den zweiten Ausgang der Koppeleinheit zu koppeln, dass die Spannung der Wandlerzellen extern zur Verfügung steht, oder aber die Wandlerzellen durch Verbinden des ersten Ausganges mit dem zweiten Ausgang zu überbrücken, so dass eine Spannung von 0 V von außen sichtbar ist.

Auf diese Weise wird es durch geeignete Ansteuerung der Koppeleinheiten der seriengeschalteten Wandlerzellenmodule möglich, eine variable Ausgangsspannung des Energiewandlers einzustellen, indem einfach eine entsprechende Anzahl der Wandlerzellenmodule aktiviert (Spannung der
Wandlerzellen am Ausgang der Koppeleinheit sichtbar) oder deaktiviert wird (Ausgangsspannung der Koppeleinheit 0 V). Indem innerhalb des Energiewandlers Wandlerzellenmodule mit einer ersten Polarität und solche mit einer entgegengesetzten zweiten Polarität vorgesehen sind, wird es möglich, eine bipolare Ausgangsspannung des Energiewandlers zu erzeugen. Die bipolare Ausgangsspannung kann beispielsweise zur Vorgabe des Drehsinns eines Gleichspannungsmotors eingesetzt werden.

Die Erfindung bietet die Vorteile, dass so die Funktion des Pulswechselrichters des Standes der Technik vom Energiewandler übernommen werden kann und ein Pufferkondensator zur Abpufferung eines Gleichspannungszwischenkreises überflüssig wird und eingespart werden kann. Der Energiewandler der Erfindung kann daher direkt mit einem elektrischen Verbraucher verbunden werden, der eine Wechselspannung als Speisespannung voraussetzt.

Im Extremfall weist jedes Wandlerzellenmodul nur eine Wandlerzelle oder ausschließlich eine Parallelschaltung von Wandlerzellen auf. In diesem Fall kann die Ausgangsspannung des Energiewandlers am feinsten eingestellt werden. Werden dabei, wie im Rahmen der Erfindung allgemein bevorzugt, als Wandlerzellen Lithium-Ionen-Batteriezellen eingesetzt, welche eine Zellspannung zwischen 2,5 und 4,2 V besitzen, lässt sich die Ausgangsspannung der Batterie entsprechend genau einstellen. Je genauer die Ausgangsspannung der Batterie einstellbar ist, desto kleiner wird auch die Problematik der elektromagnetischen Verträglichkeit, weil die durch den Batteriestrom verursachten Abstrahlungen mit dessen hochfrequenten Anteilen sinken. Dem steht jedoch ein erhöhter Schaltungsaufwand gegenüber, welcher aufgrund der Vielzahl von eingesetzten Schaltern auch erhöhte Leistungsverluste in den Schaltern der Koppeleinheiten mit sich bringt.

Bevorzugt verfügt der Energiewandler über eine Steuereinheit, welche ausgebildet ist, während einer ersten Zeitspanne das erste Steuersignal an das wenigstens eine erste Wandlerzellenmodul und das zweite Steuersignal an das wenigstens eine zweite Wandlerzellenmodul auszugeben. Die Steuereinheit ist zudem ausgebildet, in einer auf die erste Zeitspanne folgenden zweiten Zeitspanne das zweite Steuersignal an das wenigstens eine erste Wandlerzellenmodul und das erste Steuersignal an das wenigstens eine zweite Wandlerzellenmodul auszugeben und so eine Ausgangsspannung des Energiewandlers während der ersten Zeitspanne mit einem ersten Vorzeichen und während der zweiten Zeitspanne mit einem dem ersten Vorzeichen entgegengesetzten zweiten Vorzeichen einzustellen.

Wird die Steuereinheit in den Energiewandler integriert, kann der Energiewandler autark fungieren und eine Ausgangsspannung mit wechselndem Vorzeichen generieren.

Der Energiewandler verfügt besonders bevorzugt über eine Mehrzahl von ersten Wandlerzellenmodulen und eine Mehrzahl von zweiten Wandlerzellenmodulen. Dabei kann die Steuereinheit ausgebildet sein, eine sinusförmige Ausgangsspannung einzustellen. Sinusförmige Ausgangsspannungen erlauben einen direkten Anschluss von Komponenten, welche für den Betrieb an einem Wechselspannungsnetz entworfen wurden. In diesem Zusammenhang ist unter "sinusförmig" auch ein stufiges Signal zu verstehen, das eine Sinusform mit einem möglichst geringen Fehler approximiert. Je höher dabei die Anzahl der ersten und zweiten Wandlerzellenmodule in dem Energiewandler ist, desto kleiner fallen die Stufen bezogen auf die Amplitude der Ausgangsspannung aus.

Vorzugsweise ist die Steuereinheit dabei außerdem dazu ausgebildet, die sinusförmige Ausgangsspannung mit einer vorgebbaren Frequenz einzustellen. Dadurch können von der Frequenz der Versorgungsspannung abhängende Parameter eines an den Energiewandler angeschlossenen Systems vorgegeben werden. Auch ist es einfach möglich, einen solchen Energiewandler in ein Regelsystem einzubeziehen, welches die Ausgangsspannung des Energiewandlers mit der Spannung eines Energieversorgernetzes synchronisiert.

Die Koppeleinheit kann einen ersten Ausgang aufweisen und ausgebildet sein, auf das erste Steuersignal hin entweder den ersten Eingang oder den zweiten Eingang mit dem Ausgang zu verbinden. Der Ausgang ist dabei mit einem der Terminals des Wandlerzellenmoduls und einer von erstem oder zweitem Eingang mit dem anderen der Terminals des Wandlerzellenmoduls verbunden. Eine solche Koppeleinheit kann mit dem Einsatz von nur zwei Schaltern, bevorzugt Halbleiterschaltern wie MOSFETs oder IGBTs, realisiert werden.

Alternativ kann die Koppeleinheit einen ersten Ausgang und einen zweiten Ausgang aufweisen und ausgebildet sein, auf das erste Steuersignal hin den ersten Eingang mit dem ersten Ausgang und den zweiten Eingang mit dem zweiten Ausgang zu verbinden. Dabei ist die Koppeleinheit außerdem ausgebildet, auf das zweite Steuersignal hin den ersten Eingang vom ersten Ausgang und den zweiten Eingang vom zweiten Ausgang abzutrennen und den ersten Ausgang mit dem zweiten Ausgang zu verbinden. Diese Ausführungsform benötigt einen etwas höheren Schaltungsaufwand (gewöhnlich drei Schalter), koppelt aber die Wandlerzellen des Wandlerzellenmoduls an dessen beiden Polen ab. Dies bietet den Vorteil, dass bei einer Beschädigung eines Wandlerzellenmoduls dessen Wandlerzellen spannungsfrei geschaltet und so im fortwährenden Betrieb der Gesamtanordnung gefahrlos ausgetauscht werden können.

Ein zweiter Aspekt der Erfindung betrifft ein Kraftfahrzeug mit einem elektrischen Antriebsmotor zum Antreiben des Kraftfahrzeuges und einem mit dem Antriebsmotor verbundenen Energiewandler gemäß dem ersten Erfindungsaspekt.

Ein dritter Aspekt der Erfindung führt ein Verfahren zum Versorgen eines elektrischen Antriebssystems ein. Das Verfahren weist wenigstens die folgenden Schritte auf:
a) Bereitstellen eines Energiewandlers gemäß dem ersten Erfindungsaspekt;
b) Verbinden des Energiewandlers mit einem elektrischen Antriebssystem; und
c) Einstellen einer Ausgangsspannung des Energiewandlers mit einem ersten Vorzeichen während einer ersten Zeitspanne und mit einem dem ersten Vorzeichen entgegengesetzten zweiten Vorzeichen während einer zweiten Zeitspanne.

### Zeichnungen

Ausführungsbeispiele der Erfindung werden anhand der Zeichnungen und der nachfolgenden Beschreibung näher erläutert, wobei gleiche Bezugszeichen gleiche oder funktional gleichartige Komponenten bezeichnen. Es zeigen:
Figur 1 ein elektrisches Antriebssystem gemäß dem Stand der Technik,
Figur 2 ein Blockschaltbild einer Batterie gemäß dem Stand der Technik,
Figur 3 eine erste Ausführung einer Koppeleinheit zum Einsatz in dem erfindungsgemäßen Energiewandler,
Figur 4 eine mögliche schaltungstechnische Umsetzung der ersten Ausführungsform der Koppeleinheit,
Figuren 5 und 6 zwei Ausführungsformen eines Wandlerzellenmoduls mit der ersten Ausführungsform der Koppeleinheit,
Figur 7 eine zweite Ausführungsform einer Koppeleinheit zum Einsatz in dem erfindungsgemäßen Energiewandler,
Figur 8 eine mögliche schaltungstechnische Umsetzung der zweiten Ausführungsform der Koppeleinheit,
Figur 9 eine Ausführungsform eines Wandlerzellenmoduls mit der zweiten Ausführungsform der Koppeleinheit,
Figuren 10 bis 13 Ausführungsformen des erfindungsgemäßen Energiewandlers, und
Figur 14 einen zeitlichen Verlauf einer Ausgangsspannung des erfindungsgemäßen Energiewandlers.

### Ausführungsformen der Erfindung

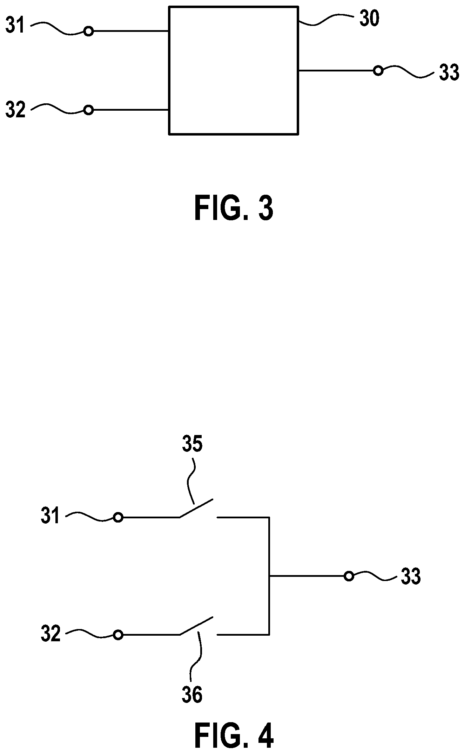

Figur 3 zeigt eine erste Ausführung einer Koppeleinheit 30 zum Einsatz in dem erfindungsgemäßen Energiewandler. Die Koppeleinheit 30 besitzt zwei Eingänge 31 und 32 sowie einen Ausgang 33 und ist ausgebildet, einen der Eingänge 31 oder 32 mit dem Ausgang 33 zu verbinden und den anderen abzukoppeln.

Figur 4 zeigt eine mögliche schaltungstechnische Umsetzung der ersten Ausführungsform der Koppeleinheit 30, bei der ein erster und ein zweiter Schalter 35 beziehungsweise 36 vorgesehen sind. Jeder der Schalter 35, 36 ist zwischen einen der Eingänge 31 beziehungsweise 32 und den Ausgang 33 geschaltet. Diese Ausführungsform bietet den Vorteil, dass auch beide Eingänge 31, 32 vom Ausgang 33 abgekoppelt werden können, so dass der Ausgang 33 hochohmig wird, was beispielsweise im Fall einer Reparatur oder Wartung nützlich sein kann. Zudem können die Schalter 35, 36 einfach als Halbleiterschalter wie z. B. MOSFETs oder IGBTs verwirklicht werden. Halbleiterschalter haben den Vorteil eines günstigen Preises und einer hohen Schaltgeschwindigkeit, so dass die Koppeleinheit 30 innerhalb einer geringen Zeit auf ein Steuersignal beziehungsweise eine Änderung des Steuersignals reagieren kann und hohe Umschaltraten erreichbar sind. Gegenüber einem gewöhnlichen Pulswechselrichter, welcher eine gewünschte Spannungsform durch entsprechende Wahl eines Tastverhältnisses zwischen maximaler und minimaler Gleichspannung (Pulsweitenmodulation) erzeugt, besitzt die Erfindung jedoch den Vorteil, dass die Schaltfrequenzen der in den Koppeleinheiten eingesetzten Schalter wesentlich niedriger ist, so dass die Elektromagnetische Verträglichkeit (EMV) verbessert wird und geringere Anforderungen an die Schalter gestellt werden können.

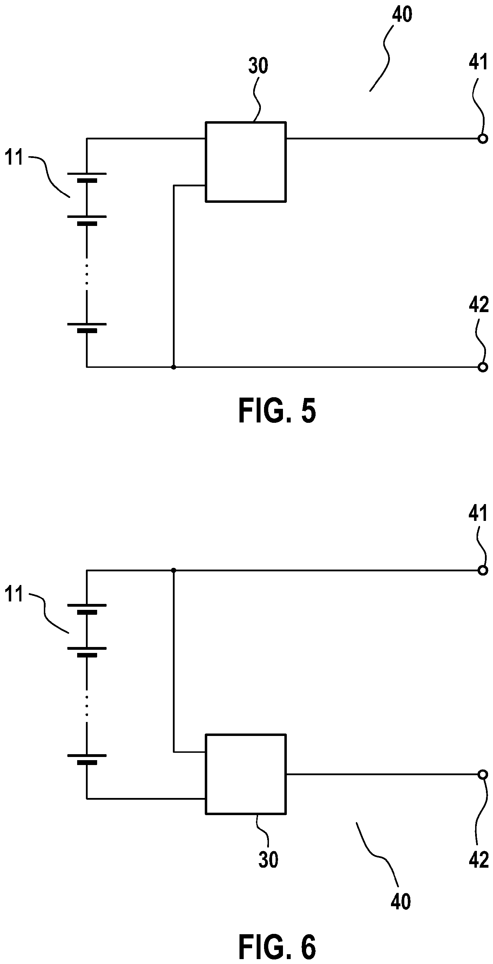

Die Figuren 5 und 6 zeigen zwei Ausführungsformen eines Wandlerzellenmoduls 40 mit der ersten Ausführungsform der Koppeleinheit 30. Eine Mehrzahl von Wandlerzellen 11, die hier als elektrochemische Batteriezellen ausgeführt sind, sind zwischen die Eingänge der Koppeleinheit 30 in Serie geschaltet. Anstelle von Batteriezellen könnten beispielsweise auch Solarzellen als Wandlerzellen zum Einsatz kommen.

Die Erfindung ist jedoch nicht auf eine Serienschaltung von Wandlerzellen 11 wie in den Figuren gezeigt beschränkt, es kann hingegen auch nur eine einzelne Wandlerzelle 11 vorgesehen sein oder aber eine Parallelschaltung oder gemischt-seriell-parallele Schaltung von Wandlerzellen 11. Im Beispiel der Figur 5 sind der Ausgang der Koppeleinheit 30 mit einem ersten Terminal 41 und der negative Pol der Wandlerzellen 11 mit einem zweiten Terminal 42 verbunden. Es ist jedoch eine beinahe spiegelbildliche Anordnung wie in Figur 6 möglich, bei der der positive Pol der Wandlerzellen 11 mit dem ersten Terminal 41 und der Ausgang der Koppeleinheit 30 mit dem zweiten Terminal 42 verbunden sind.

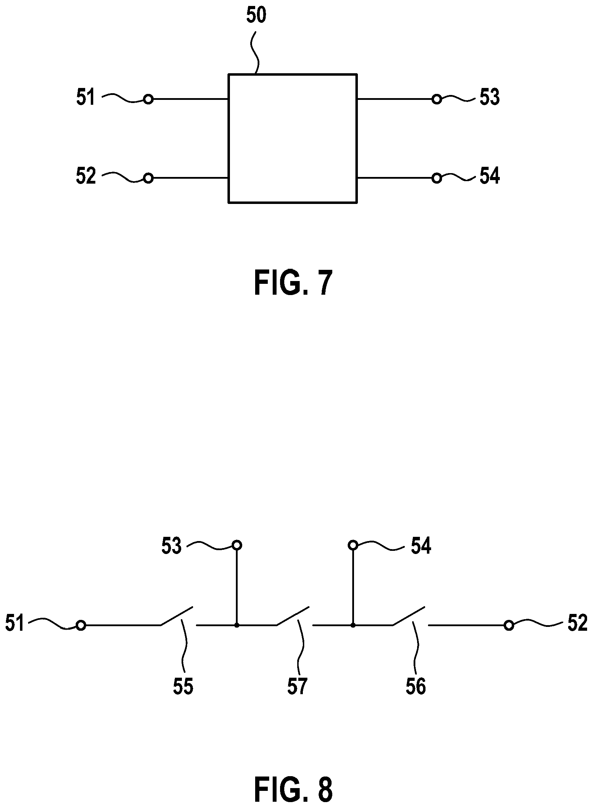

Figur 7 zeigt eine zweite Ausführungsform einer Koppeleinheit 50 zum Einsatz in dem erfindungsgemäßen Energiewandler. Die Koppeleinheit 50 besitzt zwei Eingänge 51 und 52 sowie zwei Ausgänge 53 und 54. Sie ist ausgebildet, entweder den ersten Eingang 51 mit dem ersten Ausgang 53 sowie den zweiten Eingang 52 mit dem zweiten Ausgang 54 zu verbinden (und den ersten Ausgang 53 vom zweiten Ausgang 54 abzukoppeln) oder aber den ersten Ausgang 53 mit dem zweiten Ausgang 54 zu verbinden (und dabei die Eingänge 51 und 52 abzukoppeln). Bei bestimmten Ausführungsformen der Koppeleinheit kann diese außerdem ausgebildet sein, beide Eingänge 51, 52 von den Ausgängen 53, 54 abzutrennen und auch den ersten Ausgang 53 vom zweiten Ausgang 54 abzukoppeln. Nicht vorgesehen ist jedoch, sowohl den ersten Eingang 51 mit dem zweiten Eingang 52 zu verbinden.

Figur 8 zeigt eine mögliche schaltungstechnische Umsetzung der zweiten Ausführungsform der Koppeleinheit 50, bei der ein erster, ein zweiter und ein dritter Schalter 55, 56 und 57 vorgesehen sind. Der erste Schalter 55 ist zwischen den ersten Eingang 51 und den ersten Ausgang 53 geschaltet, der zweite Schalter 56 ist zwischen den zweiten Eingang 52 und den zweiten Ausgang 54 und der dritte Schalter 57 zwischen den ersten Ausgang 53 und den zweiten Ausgang 54 geschaltet. Diese Ausführungsform bietet ebenfalls den Vorteil, dass die Schalter 55, 56 und 57 einfach als Halbleiterschalter wie z. B. MOSFETs oder IGBTs verwirklicht werden können. Halbleiterschalter haben den Vorteil eines günstigen Preises und einer hohen Schaltgeschwindigkeit, so dass die Koppeleinheit 50 innerhalb einer geringen Zeit auf ein Steuersignal beziehungsweise eine Änderung des Steuersignals reagieren kann und hohe Umschaltraten erreichbar sind.

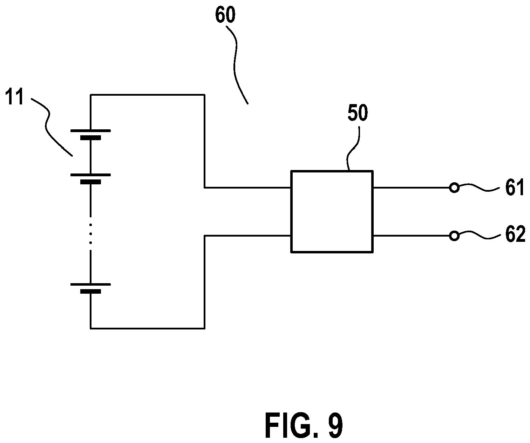

Die Figur 9 zeigt eine Ausführungsform eines Wandlerzellenmoduls 60 mit der zweiten Ausführungsform der Koppeleinheit 50. Eine Mehrzahl von Wandlerzellen 11, wiederum ohne Beschränkung der Allgemeinheit als Batteriezellen ausgeführt, sind zwischen die Eingänge einer Koppeleinheit 50 in Serie geschaltet. Auch diese Ausführungsform des Wandlerzellenmoduls 60 ist nicht auf eine Serienschaltung von Wandlerzellen 11 beschränkt, es kann wiederum auch nur eine einzelne Wandlerzelle 11 vorgesehen sein oder aber eine Parallelschaltung oder gemischt-seriell-parallele Schaltung von Wandlerzellen 11. Der erste Ausgang der Koppeleinheit 50 ist mit einem ersten Terminal 61 und der zweite Ausgang der Koppeleinheit 40 mit einem zweiten Terminal 62 verbunden. Das Wandlerzellenmodul 60 bietet gegenüber dem Wandlerzellenmodul 40 der Figuren 5 und 6 den Vorteil, dass die Wandlerzellen 11 durch die Koppeleinheit 50 von dem restlichen Energiewandler beidseitig abgekoppelt werden können, was einen gefahrlosen Austausch im laufenden Betrieb ermöglicht, da an keinem Pol der Wandlerzellen 11 die gefährliche hohe Summenspannung der restlichen Wandlerzellenmodule des Energiewandlers anliegt.

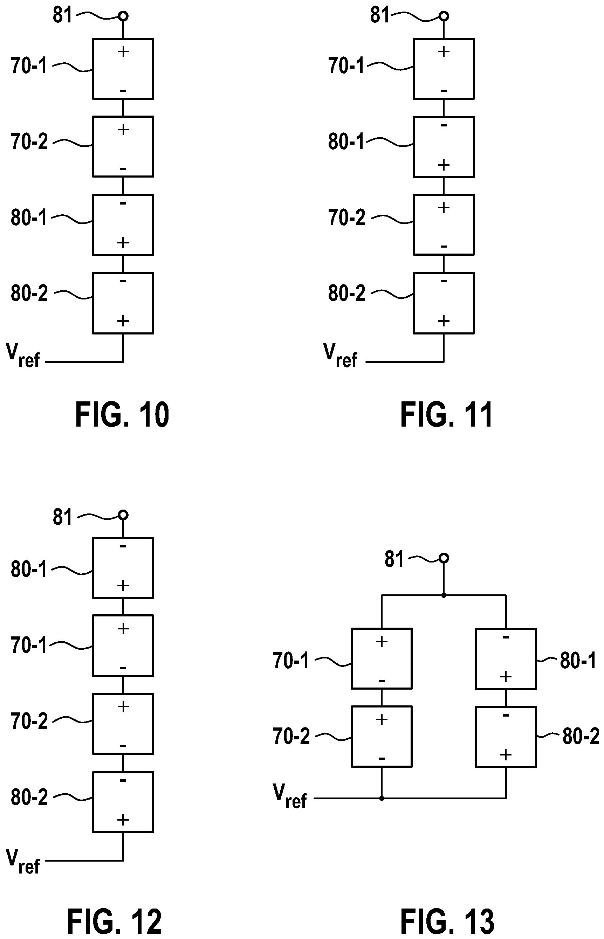

Die Figuren 10 bis 13 zeigen Ausführungsformen des erfindungsgemäßen Energiewandlers. Den Ausführungsformen ist gemein, dass sie jeweils zwei Wandlerzellenmodule 70-1 und 70-2 mit einer ersten Polarität und zwei Wandlerzellenmodule 80-1 und 80-2 mit einer entgegengesetzten zweiten Polarität aufweisen. Die Wandlerzellenmodule 70-1, 70-2 einerseits und 80-1, 80-2 andererseits können intern identisch aufgebaut sein, sind jedoch extern in entgegengesetzter Richtung verschaltet. Die Erfindung kann selbstredend auch mit nur einem Wandlerzellenmodul jeder der beiden Polaritäten oder aber mit jeweils größeren Zahlen als zwei aufgebaut werden. Bevorzugt sind jedoch je Polarität gleich viele Wandlerzellenmodule vorgesehen.

In Figur 10 sind die Wandlerzellenmodule 70-1, 70-2, 80-1 und 80-2 zwischen ein Ausgangsterminal 81 des Energiewandlers und ein Referenzpotential (gewöhnlich Masse) in Serie geschaltet, wobei die Wandlerzellenmodule so verschaltet sind, dass sich jeweils ein Teilstrang mit den Wandlerzellenmodulen 70-1, 70-2 der ersten Polarität und einer mit den Wandlerzellenmodulen 80-1, 80-2 der zweiten Polarität ergeben, welche wiederum in Serie geschaltet sind. Es ist jedoch, wie in Figur 11 dargestellt, auch möglich, jeweils ein Wandlerzellenmodul 70-1 oder 70-2 der ersten Polarität und ein Wandlerzellenmodul 80-1 oder 80-2 der zweiten Polarität zu einem Teilstrang zusammenzuschalten und mehrerer solcher gemischter Teilstränge zu kaskadieren. Es ist grundsätzlich jedoch eine beliebige Reihenfolge von Wandlerzellenmodulen unabhängig von ihrer Polarität möglich, wie in Figur 12 beispielhaft illustriert. Es ist allerdings nicht notwendig, alle Wandlerzellenmodule in Reihe zu schalten. Figur 13 zeigt ein Ausführungsbeispiel, bei dem die Wandlerzellenmodule 70-1, 70-2 der ersten Polarität zu einem ersten Teilstrang und die Wandlerzellenmodule 80-1, 80-2 der zweiten Polarität zu einem zweiten Teilstrang zusammengeschaltet und die beiden Teilstränge parallel zwischen das Ausgangsterminal 81 und das Referenzpotential geschaltet werden. In diesem Fall wird wenigstens ein Wandlerzellenmodul desjenigen Teilstranges, der inaktiv ist, in einen hochohmigen Zustand geschaltet, um nicht die aktiven Wandlerzellenmodule des anderen Teilstranges über den inaktiven Teilstrang kurzzuschließen. Dies bedeutet, dass für das Ausführungsbeispiel der Figur 13 in jedem Teilstrang wenigstens ein Wandlerzellenmodul 60 mit der zweiten Ausführungsform der Koppeleinheit 50 von Figur 8 beziehungsweise 9 vorzusehen ist.

Der Energiewandler kann zusätzlich Lade- und Trenneinrichtungen beziehungsweise Trenneinrichtungen wie bei Figur 2 vorgesehen aufweisen, wenn Sicherheitsbestimmungen dies erfordern. Allerdings sind solche Trenneinrichtungen erfindungsgemäß nicht notwendig, weil eine Abkopplung der Wandlerzellen 11 von den Anschlüssen des Energiewandlers durch die in den Wandlerzellenmodulen enthaltenen Koppeleinheiten erfolgen kann.

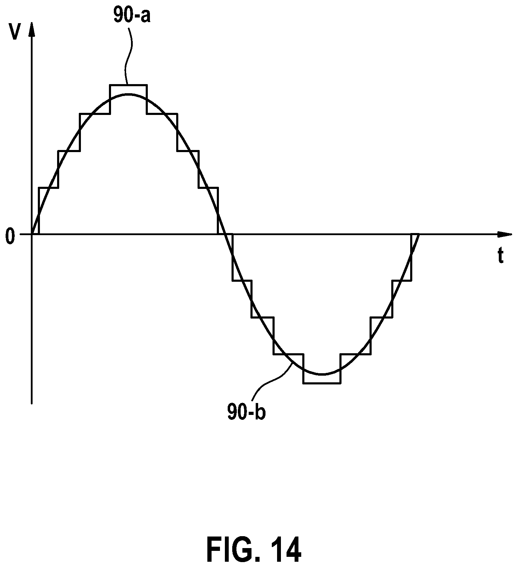

Figur 14 zeigt einen beispielhaften zeitlichen Verlauf einer Ausgangsspannung des erfindungsgemäßen Energiewandlers. Die Ausgangsspannung des Energiewandlers V ist dabei über der Zeit t aufgetragen. Mit dem Bezugszeichen 90-b ist ein für einen beispielhaften Anwendungszweck gewünschter (idealer) Sinus aufgetragen, der eine positive und eine negative Halbphase aufweist. Der ideale Sinus wird von dem erfindungsgemäßen Energiewandler durch eine wertdiskrete Spannungskurve 90-a näherungsweise erzeugt. Die Abweichungen der wertdiskreten Spannungskurve 90-a von der idealen Kurve 90-b hängen hinsichtlich ihrer Größe von der Anzahl von Wandlerzellen 11, die in einem Batteriemodul 40 oder 60 in Serie geschaltet sind, sowie deren jeweiligen Zellspannung ab. Je weniger Wandlerzellen 11 in einem Wandlerzellenmodul in Serie geschaltet sind, desto genauer kann die wertdiskrete Spannungskurve 90-a der idealisierten Kurve 90-b folgen. In üblichen Anwendungen beeinträchtigen die verhältnismäßig geringen Abweichungen die Funktion des Gesamtsystems jedoch nicht. Gegenüber einem herkömmlichen Pulswechselrichter, welcher nur eine binäre Ausgangsspannung zur Verfügung stellen kann, welche dann durch die nachfolgenden Schaltungskomponenten gefiltert werden muss, sind die Abweichungen deutlich verringert.

## Patentansprüche

1. Ein Energiewandler zum Ausgeben elektrischer Energie, der Energiewandler aufweisend wenigstens ein erstes Wandlerzellenmodul (70-1, 70-2) und wenigstens ein zweites Wandlerzellenmodul (80-1, 80-2), wobei das wenigstens eine erste und das wenigstens eine zweite Wandlerzellenmodul (70-1, 70-2; 80-1, 80-2) wenigstens eine Wandlerzelle (11) und eine Koppeleinheit (30, 50) umfassen, wobei die wenigstens eine Wandlerzelle (11) zwischen einen ersten Eingang (31, 51) und einen zweiten Eingang (32, 52) der Koppeleinheit (30, 50) geschaltet und die Koppeleinheit (30, 50) ausgebildet ist, auf ein erstes Steuersignal hin die wenigstens eine Wandlerzelle (11) zwischen ein erstes Terminal (41, 61) des Wandlerzellenmoduls (70-1, 70-2; 80-1, 80-2) und ein zweites Terminal (42, 62) des Wandlerzellenmoduls (70-1, 70-2; 80-1, 80-2) zu schalten und auf ein zweites Steuersignal hin das erste Terminal (41, 61) mit dem zweiten Terminal (42, 62) zu verbinden, **dadurch gekennzeichnet, dass** die wenigstens eine Wandlerzelle (11) des wenigstens einen ersten Wandlerzellenmoduls (70-1, 70-2) in einer ersten Polarität zwischen den ersten Eingang (31, 51) und den zweiten Eingang (32, 52) der Koppeleinheit (30, 50) des wenigstens einen ersten Wandlerzellenmoduls (70-1, 70-2) und die wenigstens eine Wandlerzelle (11) des wenigstens einen zweiten Wandlerzellenmoduls (80-1, 80-2) in einer der ersten Polarität entgegengesetzten zweiten Polarität zwischen den ersten Eingang (31, 51) und den zweiten Eingang (32, 52) der Koppeleinheit (30, 50) des wenigstens einen zweiten Wandlerzellenmoduls (80-1, 80-2) geschaltet sind, wobei der Energiewandler mit einem elektrischen Antriebsmotor verbunden ist, wobei der Energiewandler mit einer Steuereinheit, welche ausgebildet ist, während einer ersten Zeitspanne das erste Steuersignal an das wenigstens eine erste Wandlerzellenmodul (70-1, 70-2) und das zweite Steuersignal an das wenigstens eine zweite Wandlerzellenmodul (80-1, 80-2) und in einer auf die erste Zeitspanne folgenden zweiten Zeitspanne das zweite Steuersignal an das wenigstens eine erste Wandlerzellenmodul (70-1, 70-2) und das erste Steuersignal an das wenigstens eine zweite Wandlerzellenmodul (80-1, 80-2) auszugeben und so eine Ausgangsspannung des Energiewandlers während der ersten Zeitspanne mit einem ersten Vorzeichen und während der zweiten Zeitspanne mit einem dem ersten Vorzeichen entgegengesetzten zweiten Vorzeichen einzustellen.

2. Der Energiewandler gemäß Anspruch 1, mit einer Mehrzahl von ersten Wandlerzellenmodulen (70-1, 70-2) und einer Mehrzahl von zweiten Wandlerzellenmodulen (80-1, 80-2), bei dem die Steuereinheit ausgebildet ist, eine sinusförmige Ausgangsspannung einzustellen.

3. Der Energiewandler gemäß Anspruch 2, bei dem die Steuereinheit ausgebildet ist, die sinusförmige Ausgangsspannung mit einer vorgebbaren Frequenz einzustellen.

4. Der Energiewandler gemäß einem der vorhergehenden Ansprüche, bei dem die Koppeleinheit (30) einen ersten Ausgang (33) aufweist und ausgebildet ist, auf das erste Steuersignal hin entweder den ersten Eingang (31) oder den zweiten Eingang (32) mit dem ersten Ausgang (33) zu verbinden.

5. Der Energiewandler gemäß einem der Ansprüche 1 bis 3, bei dem die Koppeleinheit (50) einen ersten Ausgang (53) und einen zweiten Ausgang (54) aufweist und ausgebildet ist, auf das erste Steuersignal hin den ersten Eingang (51) mit dem ersten Ausgang (53) und den zweiten Eingang (52) mit dem zweiten Ausgang (54) zu verbinden und auf das zweite Steuersignal hin den ersten Eingang (51) vom ersten Ausgang (53) und den zweiten Eingang (52) vom zweiten Ausgang (54) abzutrennen und den ersten Ausgang (53) mit dem zweiten Ausgang (54) zu verbinden.

6. Der Energiewandler gemäß einem der vorhergehenden Ansprüche, bei dem die Wandlerzellen Batteriezellen sind.

7. Der Energiewandler gemäß einem der Ansprüche 1 bis 5, bei dem die Wandlerzellen Solarzellen sind.

8. Ein Kraftfahrzeug mit einem Energiewandler nach einem der Ansprüche 1 bis 6, wobei der mit dem Energiewandler verbundene elektrische Antriebsmotor das Kraftfahrzeug antreibt.

9. Ein Verfahren zum Versorgen eines elektrischen Antriebssystems mit den Schritten:
a) Bereitstellen eines Energiewandlers gemäß einem der Ansprüche 1 bis 7;
b) Verbinden des Energiewandlers mit einem elektrischen Antriebssystem; und
c) Einstellen einer Ausgangsspannung des Energiewandlers mit einem ersten Vorzeichen während einer ersten Zeitspanne und mit einem dem ersten Vorzeichen entgegengesetzten zweiten Vorzeichen während einer zweiten Zeitspanne.

## Claims

1. Energy converter for outputting electrical energy, the energy converter having at least one first converter cell module (70-1, 70-2) and at least one second converter cell module (80-1, 80-2), wherein the at least one first and the at least one second converter cell modules (70-1, 70-2; 80-1, 80-2) comprise at least one converter cell (11) and one coupling unit (30, 50), wherein the at least one converter cell (11) is connected between a first input (31, 51) and a second input (32, 52) of the coupling unit (30, 50) and the coupling unit (30, 50) is configured to connect the at least one converter cell (11) between a first terminal (41, 61) of the converter cell module (70-1, 70-2; 80-1, 80-2) and a second terminal (42, 62) of the converter cell module (70-1, 70-2; 80-1, 80-2) in response to a first control signal, and to connect the first terminal (41, 61) to the second terminal (42, 62) in response to a second control signal, **characterized in that** the at least one converter cell (11) of the at least one first converter cell module (70-1, 70-2) is connected in a first polarity between the first input (31, 51) and the second input (32, 52) of the coupling unit (30, 50) of the at least one first converter cell module (70-1, 70-2) and the at least one converter cell (11) of the at least one second converter cell module (80-1, 80-2) is connected in a second polarity, which is opposite to the first polarity, between the first input (31, 51) and the second input (32, 52) of the coupling unit (30, 50) of the at least one second converter cell module (80-1, 80-2), wherein the energy converter is connected to an electric drive motor, wherein the energy converter having a control unit, which is configured to output the first control signal to the at least one first converter cell module (70-1, 70-2) and to output the second control signal to the at least one second converter cell module (80-1, 80-2) during a first period and to output, in a second period following the first period, the second control signal to the at least one first converter cell module (70-1, 70-2) and to output the first control signal to the at least one second converter cell module (80-1, 80-2), and thus to set an output voltage for the energy converter to have a first arithmetic sign during the first period and to have a second arithmetic sign, which is opposite to the first arithmetic sign, during the second period.

2. Energy converter according to Claim 1, having a plurality of first converter cell modules (70-1, 70-2) and a plurality of second converter cell modules (80-1, 80-2), in which energy converter the control unit is configured to set a sinusoidal output voltage.

3. Energy converter according to Claim 2, in which the control unit is configured to set the sinusoidal output voltage to have a predefinable frequency.

4. Energy converter according to one of the preceding claims, in which the coupling unit (30) has a first output (33) and is configured to connect either the first input (31) or the second input (32) to the first output (33) in response to the first control signal.

5. Energy converter according to one of Claims 1 to 3, in which the coupling unit (50) has a first output (53) and a second output (54) and is configured to connect the first input (51) to the first output (53) and the second input (52) to the second output (54) in response to the first control signal, and to disconnect the first input (51) from the first output (53) and the second input (52) from the second output (54) and to connect the first output (53) to the second output (54) in response to the second control signal.

6. Energy converter according to one of the preceding claims, in which the converter cells are battery cells.

7. Energy converter according to one of Claims 1 to 5, in which the converter cells are solar cells.

8. Motor vehicle having an energy converter according to one of Claims 1 to 6, wherein the electric drive motor which is connected to the energy converter drives the motor vehicle.

9. Method for supplying power to an electric drive system having the steps of:
a) providing an energy converter according to one of Claims 1 to 7;
b) connecting the energy converter to an electric drive system;
and
c) setting an output voltage for the energy converter to have a first arithmetic sign during a first period and to have a second arithmetic sign, which is opposite to the first arithmetic sign, during a second period.

## Revendications

1. Convertisseur d'énergie destiné à fournir de l'énergie électrique, le convertisseur d'énergie comportant au moins un premier module de cellules de convertisseur (70-1, 70-2) et au moins un deuxième module de cellules de convertisseur (80-1, 80-2), dans lequel ledit au moins un premier et ledit au moins un deuxième module de cellules de convertisseur (70-1, 70-2 ; 80-1, 80-2) comprennent au moins une cellule de convertisseur (11) et une unité de couplage (30, 50), dans lequel ladite au moins une cellule de convertisseur (11) est connectée entre une première entrée (31, 51) et une deuxième entrée (32, 52) de l'unité de couplage (30, 50) et l'unité de couplage (30, 50) est conçue, en réponse à un premier signal de commande, pour connecter ladite au moins une cellule de convertisseur (11) entre une première borne (41, 61) du module de cellules de convertisseur (70-1, 70-2 ; 80-1, 80-2) et une deuxième borne (42, 62) du module de cellules de convertisseur (70-1, 70-2 ; 80-1, 80-2), et, en réponse à un deuxième signal de commande, pour relier la première borne (41, 61) à la deuxième borne (42, 62),
**caractérisé en ce que** ladite au moins une cellule de convertisseur (11) dudit au moins un premier module de cellules de convertisseur (70-1, 70-2) est connectée dans une première polarité entre la première entrée (31, 51) et la deuxième entrée (32, 52) de l'unité de couplage (30, 50) dudit au moins un premier module de cellules de convertisseur (70-1, 70-2) et ledit au moins une cellule de convertisseur (11) dudit au moins un deuxième module de cellules de convertisseur (80-1, 80-2) est connectée dans une deuxième polarité opposée à la première polarité entre la première entrée (31, 51) et la deuxième entrée (32, 52) de l'unité de couplage (30, 50) dudit au moins un deuxième module de cellules de convertisseur (80-1, 80-2), dans lequel le convertisseur d'énergie est relié à un moteur d'entraînement électrique, dans lequel le convertisseur d'énergie comportant une unité de commande qui est conçue, pendant une première période de temps, pour délivrer le premier signal de commande audit moins un premier module de cellules de convertisseur (70-1, 70-2) et le deuxième signal de commande audit au moins un deuxième module de cellules de convertisseur (80-1, 80-2) et, pendant une deuxième période de temps faisant suite à la première période de temps, pour délivrer le deuxième signal de commande audit moins un premier module de cellules de convertisseur (70-1, 70-2) et le premier signal de commande audit au moins un deuxième module de cellules de convertisseur (80-1, 80-2) et ainsi régler une tension de sortie du convertisseur d'énergie pendant la première période de temps avec un premier signe et pendant la deuxième période de temps avec un deuxième signe opposé au premier signe.

2. Convertisseur d'énergie selon la revendication 1, comprenant une pluralité de premiers modules de cellules de convertisseur (70-1, 70-2) et une pluralité de deuxièmes modules de cellules de convertisseur (80-1, 80-2), dans lequel l'unité de commande est conçue pour régler une tension de sortie sinusoïdale.

3. Convertisseur d'énergie selon la revendication 2, dans lequel l'unité de commande est conçue pour régler la tension de sortie sinusoïdale avec une fréquence prédéfinissable.

4. Convertisseur d'énergie selon l'une des revendications précédentes, dans lequel l'unité de couplage (30) comporte une première sortie (33) et est conçue, en réponse au premier signal de commande, pour relier soit la première entrée (31) soit la deuxième entrée (32) à la première sortie (33).

5. Convertisseur d'énergie selon l'une des revendications 1 à 3, dans lequel l'unité de couplage (50) comporte une première sortie (53) et une deuxième sortie (54) et est conçu, en réponse au premier signal de commande, pour relier la première entrée (51) à la première sortie (53) et la deuxième entrée (52) à la deuxième sortie (54) et, en réponse au deuxième signal de commande, pour déconnecter la première entrée (51) de la première sortie (53) et la deuxième entrée (52) de la deuxième sortie (54) et pour relier la première sortie (53) à la deuxième sortie (54).

6. Convertisseur d'énergie selon l'une des revendications précédentes, dans lequel les cellules de convertisseur sont des cellules de batterie.

7. Convertisseur d'énergie selon l'une des revendications 1 à 5, dans lequel les cellules de convertisseur sont des cellules solaires.

8. Véhicule à moteur équipé d'un convertisseur d'énergie selon l'une des revendications 1 à 6, dans lequel le moteur d'entraînement électrique relié au convertisseur d'énergie entraîne le véhicule.

9. Procédé pour l'alimentation d'un système d'entraînement électrique, comprenant les étapes consistant à :
a) prévoir un convertisseur d'énergie selon l'une des revendications 1 à 7 ;
b) relier le convertisseur d'énergie à un système d'entraînement électrique ; et
c) régler une tension de sortie du convertisseur d'énergie avec un premier signe pendant une première période de temps et avec un deuxième signe opposé au premier signe pendant une deuxième période de temps.
